# EUROPÄISCHE PATENTANMELDUNG

(11) **EP 4 116 235 A1**
(43) Veröffentlichungstag der Anmeldung: **11.01.2023**
(21) Anmeldenummer: 21184870.0
(22) Anmeldetag: 09.07.2021
(51) Int. Cl.: B65G 1/137, B65G 47/61, B65G 1/04, B65G 19/02, B65G 17/20

(54) **HÄNGEFÖRDERER MIT EINER ENTLADESTATION FÜR DIE SEQUENZIERTE ENTLADUNG**

(71) Anmelder: BEUMER Group GmbH & Co. KG, 59269 Beckum (DE)
(72) Erfinder: Werner, Andreas, 44267 Dortmund (DE)
(74) Vertreter: Angerhausen, Christoph

(57) **Zusammenfassung**

Hängeförderer (100) mit einer Vielzahl an einer Förderschiene (101) hängender und entlang der Förderschiene (101) geförderter Carrier (2) zum Einhängen eines Transportguts (1, 3), etwa einer Tasche (1) und/oder eines Kleiderbügels (3), und mit mindestens einer Sortiermatrix (109) und einer Entladestation (104), der von der Sortiermatrix (109) mehrere der Transportgüter (1, 3) zugeführt sind, wobei die Transportgüter (1, 3) der Entladestation (104) als ein Batch einer bestimmten Anzahl der Transportgüter (1, 3) zugeführt sind, wobei die Entladestation (104) eine optische Anzeige (4) aufweist, dadurch gekennzeichnet, dass die optische Anzeige (4) dazu eingerichtet ist, eine Entladereihenfolge der Transportgüter (1, 3) des Batchs anzugeben.

## Beschreibung

Die Erfindung geht aus von einem Hängeförderer mit einer Vielzahl an einer Förderschiene hängender und entlang der Förderscheine geförderter Carrier zum Einhängen eines Transportguts, etwa einer Tasche und/oder eines Kleiderbügels, und mit mindestens einer Sortiermatrix und einer Entladestation, der von der Sortiermatrix mehrere der Transportgüter zugeführt sind. Ein derartiger Hängeförderer ist beispielsweise in der WO 2020/128941 A1 und in der EP 3 670 393 A1 beschrieben.

Nach dem Einhängen der Transportgüter in die Carrier bzw. dem Beladen der Taschen an einer Beladestation werden die Transportgüter gepuffert, bis diese auf eine Abfrage hin in einem Batch zusammengehöriger Transportgüter der Entladestation zugeführt werden. In der Entladestation werden die Transportgüter entleert. Dies kann beispielsweise das Aushängen eines Kleiderbügels aus dem Carrier oder das Entleeren einer in den Carrier eingehängten Tasche umfassen. Der Vorgang erfolgt häufig manuell.

Bei den aus dem Stand der Technik bekannten Systemen werden die Transportgüter für das Entladen der Entladestation in einer Reihenfolge zugeführt, welche der Entladereihenfolge entspricht. Mithin ist eine erhebliche Sortierleistung erforderlich, um die bis zum Abruf gepufferten Transportgüter in der definierten Reihenfolge der Entladestation zuzuführen. Die Sortierung erfolgt häufig mit Hilfe einer Sortiermatrix, wobei für die Sortierung auf die endgültige Sequenz in der Regel eine Mehrzahl hintereinander geschalteter Sortiermatrizen erforderlich sind. Die Sortiermatrizen nehmen jedoch einen erheblichen Bauraum ein und sind apparativ aufwändig, sodass es grundsätzlich wünschenswert ist, die Anzahl der Sortiermatrizen auf ein Minimum zu reduzieren.

Es ist daher die Aufgabe der Erfindung, den Hängeförderer der eingangs beschriebenen Art derart weiterzuentwickeln, dass die Anzahl der für die sequenzierte Entladung erforderlichen Sortiermatrizen auf ein Minimum herabgesetzt ist.

Diese Aufgabe wird durch einen Hängeförderer mit den Merkmalen des Anspruchs 1 gelöst. Die abhängigen Ansprüche betreffen jeweils vorteilhafte Ausführungsformen der Erfindung.

Demgemäß ist vorgesehen, dass die Transportgüter der Entladestation als ein Batch einer bestimmten Anzahl der Transportgüter zugeführt sind, wobei die Entladestation eine optische Anzeige aufweist, die dazu eingerichtet ist, eine Entladereihenfolge der Transportgüter des Batchs anzugeben. Die Idee der Erfindung liegt somit darin, die Sortierleistung derjenigen Sortiermatrix, welche üblicherweise dazu eingerichtet ist, die Transportgüter des der Entladestation zugeführten Batchs in die endgültige Reihenfolge zu bringen, dadurch einzusparen, dass die Transportgüter des Batchs der Entladestation in einer willkürlichen Reihenfolge zugeführt und die Entladereihenfolge an der Entladestation mit Hilfe einer optischen Anzeige angegeben wird.

Die Entladestation kann dazu eingerichtet sein, die der Entladestation zugeführten Carrier, in welche die Transportgüter des Batchs eingehängt sind, zu erkennen. Dazu können die Carrier einen berührungslos auslesbaren Speicher, beispielsweise einen RFID-Transponder aufweisen. Demgemäß kann die Entladestation einen RFID-Sensor aufweisen, welcher dazu eingerichtet ist, den RFID-Transponder auszulesen, insbesondere eine in dem RFID-Transponder eindeutige Kennung des betreffenden Carriers, aus der sich anhand einer Datenbank und/oder Lookup-Tabelle auf das Transportgut schließen lässt. Wenn das Transportgut beispielsweise eine Tasche ist, kann darüber auf den Tascheninhalt und/oder auf ein Sortierziel des Tascheninhalts geschlossen werden. Dies ermöglicht es, an der Entladestation die Entladereihenfolge der Transportgüter optisch anzuzeigen, beispielsweise entsprechend einer Reihenfolge, in der Transportbehälter, beispielsweise Kartons für den Versand der Transportgüter oder in den Taschen aufgenommener Gegenstände, bereitgestellt sind.

Die Entladestation kann eine Eingabe für die Quittierung der Entleerung einer der Transportgüter des Batchs aufweisen. Demgemäß kann die Entladestation dazu eingerichtet sein, die aktuell entsprechend der Entladereihenfolge als nächstes zu entladende Tasche oder ein sonstiges Transportgut, welches in den Carrier eingehängt ist, anzuzeigen.

Weiterhin kann die Entladestation dazu eingerichtet sein, in Folge einer Betätigung der Eingabe für die Quittierung der Entleerung mit den optischen Anzeigen das in der Entladereihenfolge nächste Transportgut anzuzeigen. Des Weiteren kann in Folge der Betätigung der Eingabe die Herausschleusung der Transportgüter des Batchs aus der Entladestation ausgelöst werden, wenn das in der Entladereihenfolge letzte Transportgut entladen beziehungsweise die Entladung durch Betätigung der Eingabe quittiert worden ist.

Die optische Anzeige kann mindestens ein örtlich verstellbares Anzeigeelement aufweisen, wobei das örtlich verstellbare Anzeigeelement vorzugsweise ein Lichtzeiger ist. Der Lichtzeiger kann ein Lichtbündel aufweisen. Beispielsweise kann der Lichtzeiger eine Laserlichtquelle aufweisen, die verstellbar angeordnet und dazu eingerichtet ist, entsprechend der in der Entladereihenfolge vorgesehenen nächsten Entleerung der Transportgüter das betroffene Transportgut anzuzeigen, beispielsweise indem der Lichtzeiger das von ihm emittierte Licht unmittelbar auf das zu entladende Transportgut oder auf eine dem betreffenden Transportgut zugeordnete Projektionsfläche der Entladestation projiziert.

Die Entladestation kann eine Mehrzahl Parkpositionen für jeweils eines der Transportgüter aufweisen. Vorzugsweise kann mindestens eine der Parkpositionen in Förderrichtung der Transportgüter durch die Entladestation variabel sein. Die Variabilität der mindestens einen Parkposition kann dazu verwendet werden, um auf eine Abmessung des Transportguts in der Förderrichtung oder auf eine Objektform des Transportguts zu reagieren. Beispielsweise kann in einem als Tasche ausgebildeten Transportgut ein Gegenstand abgelegt sein, welcher eine vergleichsweise große Abmessung aufweist, sodass die Tasche in der Förderrichtung baucht. Um das Entladen der Tasche und gegebenenfalls nachfolgender oder vorangegangener Transportgüter des Batchs in der Entladestation zu vereinfachen, kann vorgesehen sein, dass das betroffene Transportgut beispielsweise entsprechend weiter beabstandet von den benachbarten Transportgütern angeordnet ist und die optische Anzeige entsprechend nachgeführt wird.

Zumindest die der in Förderrichtung variablen Parkposition zugeordnete optische Anzeige kann in der Förderrichtung variabel verstellbar sein. Am einfachsten ist dies mit Hilfe eines Lichtzeigers realisierbar, welcher entsprechend einer Abmessung des Transportgutes und/oder eines in dem Transportgut, beispielsweise einer Tasche, aufgenommenen Gegenstands nachgeführt wird.

Die in der Förderrichtung variabel einstellbare optische Anzeige kann einen projizierten und entlang der Förderrichtung verstellbaren Lichtzeiger und/oder ein Display mit einem darauf angezeigten Indikatorelement mit in der Förderrichtung variabler Position und/oder eine Mehrzahl einzeln ansteuerbarer und in der Förderrichtung zueinander beabstandeter Leuchtelemente aufweisen.

Die optische Anzeige kann eine Ampel aufweisen, die dazu eingerichtet ist, durch wechselnde, farbige Leuchtsignale die Entladereihenfolge der Transportgüter des Batchs anzugeben. Beispielsweise kann vorgegeben sein, dass sämtlichen Transportgütern standardmäßig eine rote Ampelanzeige zugewiesen ist. Wird der Entladevorgang ausgelöst, beispielsweise durch vorheriges Quittieren einer Eingabe, kann diejenige optische Anzeige auf Grün umschalten, welche dem als nächstes zu entladenden Transportgut zugewiesen ist. Nach dem Quittieren des Entladevorgangs des zuvor mit Grün angezeigten Transportguts, kann die Anzeige auf Rot umschalten und dasjenige farbige Leuchtsignal, welches dem als nächstes zu entladenden Transportgut zugeordnet ist, von Rot auf Grün umschalten, und so weiter.

Nach dem vollständigen Entladen aller Transportgüter des Batchs sowie einer entsprechenden Quittierbedienung durch den Anwender kann vorgesehen sein, dass sämtliche farbige Leuchtsignale der Ampelanzeige auf Rot umschalten und die Herausschleusung der Transportgüter aus der Entladestation ausgelöst wird.

Alternativ oder zusätzlich kann jeder Parkposition ein Ziffernfeld der optischen Anzeige zugeordnet sein. Die Entladereihenfolge kann dabei anhand einer auf den Ziffernfeldern angezeigten Zahlensequenz angegeben sein. Insbesondere kann bei dieser Ausführungsform somit abweichend von der Ampel-Lösung vorgesehen sein, dass zu jedem Zeitpunkt während des Entladevorgangs sämtlicher Transportgüter des Batchs die Position jedes Transportguts innerhalb der Entladesequenz erkennbar ist. Dies ermöglicht es, dass mehrere Bediener gleichzeitig an derselben Entladestation tätig sind, beispielsweise derart, dass ein erster Bediener die in der Entladereihenfolge geraden Ziffern bedient, während ein zweiter Bediener die in der Entladereihenfolge ungeraden Ziffern bedient.

Die erfindungsgemäße Lösung erlaubt es, die Entladestation beliebig zu skalieren. So kann beispielsweise vorgesehen sein, dass die Entladestation mehrere Zehn oder Einhundert Transportgüter eines Batchs aufnimmt, wobei der Batch von mehreren Bedienern bedient werden kann, etwa nach dem zuvor genannten Prinzip. Je größer die Entladestation ist, desto weniger Sortierleistung muss mit Hilfe der mindestens einen der Entladestation vorgeschalteten Sortiermatrix bereitgestellt werden.

Jeder Parkposition kann eine optische Projektion oder ein Leuchtelement der optischen Anzeige zugeordnet sein. Die optischen Projektionen oder die Leuchtelemente können demgemäß unabhängig voneinander ansteuerbar sein, um die Entladereihenfolge anzuzeigen.

Die Transportgüter des Batchs können in den Parkpositionen einen definierten Abstand zueinander und vorzugsweise eine ergonomische Anordnung in Bezug auf einen Arbeitsplatz der Entladestation aufweisen. Die Transportgüter des Batchs können beispielsweise über einen Stauförderer oder einen Transferförderer der Entladestation zugeführt sein. Der Stauförderer oder der Transferförderer kann über ein Gefälle in die Entladestation münden. Die Transportgüter können an einer Zuführung der Entladestation aneinandergestaut anliegen und einzeln in die Entladestation hineindosiert werden. Innerhalb der Entladestation können die Taschen mit Hilfe eines Transferförderers in die Parkposition überführt werden. Der Transferförderer kann Mitnehmerelemente aufweisen, die unter einem Rasterabstand zueinander beabstandet sind, welcher den Abstand der Parkpositionen der Entladestation entspricht.

Die Transportgüter des Batchs können von einer Förderkette in der Förderrichtung durch die Entladestation gefördert werden, wobei die Förderkette unter einem konstanten Rasterabstand entlang der Förderkette beabstandete Mitnehmerelemente aufweist. Die Mitnehmerelemente können dazu eingerichtet sein, an einem Carrier der Transportgüter zu koppeln, wobei der Abstand aufeinanderfolgender Transportgüter des Batchs einem Vielfachen des Rasterabstands entspricht und das Vielfache vorzugsweise abhängig von einer Abmessung des Transportguts in der Förderrichtung ausgewählt ist.

Die Entladestation kann dazu eingerichtet sein, einen Speicher oder eine Kennung mindestens einer der Taschen des Batchs oder eines Carriers an dem die Tasche hängend befestigt ist, auszulesen. In dem Speicher kann ein Datensatz hinterlegt oder mit der Kennung ein Datensatz verknüpft sein, der mindestens eine Abmessung und/oder ein Gewicht, vorzugsweise eines in der Tasche aufgenommenen Transportguts, aufweist. Abhängig von der mindestens einen Abmessung und/oder dem Gewicht kann eine Parkposition der Tasche und/oder mindestens einer der Tasche nachfolgend der Entladestation zugeführten weiteren Tasche des Batchs entlang der Förderrichtung in der Entladestation bestimmt sein.

Weitere Einzelheiten der Erfindung werden anhand der nachstehenden Figuren erläutert. Dabei zeigt:
- Fig. 1: einen Hängeförderer gemäß dem Stand der Technik;
- Fig. 2: eine erste Ausführungsform einer erfindungsgemäßen Entladestation;
- Fig. 3: eine zweite Ausführungsform einer erfindungsgemäßen Entladestation.

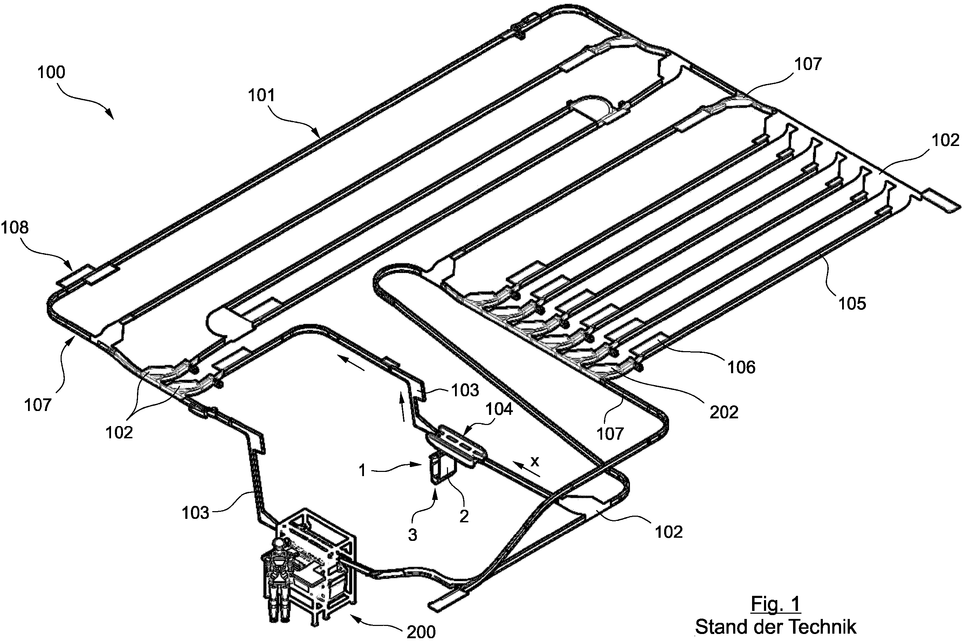

Die Fig. 1 zeigt eine beispielhafte Ausführungsform eines Hängeförderers 100 gemäß dem Stand der Technik. Der Hängeförderer 100 besteht im Wesentlichen aus einem System aus Förderschienen 101, die beispielsweise als ein Stauförderer 105 oder als ein Transferförderer 107 ausgebildet sein können. An einem Übergang 108 zwischen einem Stauförderer 105 und einem Transferförderer 107 erfolgt die Übertragung der Taschen 1 zwischen den beiden Transportsystemen. Geeignete Systeme für einen Stauförderer 105 und einen Transferförderer 107 sind in der WO 2020/128941 A1 und in der EP 3670393 A1 beschrieben.

Nach der Zuführung der Transportgüter, hier Taschen 1, über eine Beladestation 200 werden die Taschen 1 über einen Schrägförderer 103 in einen Taschenpuffer 110 mit einer oder mehreren Pufferschleifen eingeleitet und dort vorgehalten. Infolge eines Abrufs wird ein Batch aus einer Mehrzahl Taschen, in die Sortiermatrix 109 eingespeist. Insbesondere kann die Zuführung der Taschen 1 aus dem Puffer 110 in die Sortiermatrix 109 danach erfolgen, dass eine für eine hohe Sortierleistung optimale Auslastung der Sortiermatrix 109 gewährleistet ist. Auf eine Anforderung hin kann eine ganz bestimmte Anzahl von Taschen, die zusammen einen Batch zusammengehöriger Taschen bilden, aus der Sortiermatrix 109 ausgeschleust und in der Entladereihenfolge der Entladestation 104 zugeführt werden. Die Transportgüter, hier Taschen 1, des Batchs können über ein gemeinsames Sortierziel, beispielsweise eine einheitliche Versandadresse, miteinander verbunden sein. Das Sortierziel ist jedoch grundsätzlich auf keine bestimmten Sortierziele beschränkt und kann eine beliebige Eigenschaft sein, welche die verschiedenen Transportgüter, hier Taschen 1, miteinander verbindet, d. h. ein gemeinsames Merkmal der Transportgüter des Batchs bildet.

Abweichend davon ist es nun erfindungsgemäß insbesondere nicht mehr erforderlich, dass die Taschen des Batchs in einer Reihenfolge aus der Sortiermatrix 109 ausgeschleust werden, die bereits der Entladereihenfolge an der Entladestation 104 entspricht. Vielmehr können die Taschen 1 in einer beliebigen Reihenfolge zueinander angeordnet sein. D. h. auf eine Anforderung hin kann ein Batch aus beispielsweise vier Taschen in beliebiger Reigenfolge der Taschen 1 zueinander aus der Sortiermatrix 109 ausgeschleust und der Entladestation 104 zugeführt werden.

Da die Sortiermatrix 109 bei den aus dem Stand der Technik bekannten Hängeförderern 100 die Aufgabe hat, die Taschen 1 des Batchs der Entladestation 104 in der exakten Reihenfolge, in welcher sie entladen werden, zuzuführen, ist der konstruktive Aufwand der Sortiermatrix 109 entsprechend hoch. Beispielsweise muss die Sortiermatrix 109 eine Vielzahl paralleler Stauförderer 105 aufweisen, um die exakte Sequenz der Taschen 1, mit der die Taschen 1 aus der Sortiermatrix 109 ausgeschleust und der Entladestation 104 zugeführt werden, herzustellen.

Für die Sequenzierung der Taschen 1, welche entlang der Förderscheine 101 transportiert sind und in einer bevorzugten Reihenfolge und zu einer bevorzugten Zeit der Entladestation 200 zugeführt werden sollen, kann eine Sortiermatrix 109 aus einer Mehrzahl parallel zueinander geführter Stauförderer 105, die vorlaufseitig und rücklaufseitig über Weichen 102 an einen Transferförderer 107 angeschlossen sein können, bereitgestellt sein. Zur Verringerung des Footprint der Anlage können Schrägförderer 103 verwendet werden, welche einen mehretagigen Aufbau der Anlage erlauben. Überfüllsensoren 106 entlang der Staufördererstrecken 105 der Sortierschleife detektieren einen Füllstand des betreffenden Stauförderers 105, um durch geeignete Umleitung von der Sortierschleife zugeführter neuer Taschen 1 eine Überfüllung bestimmter Stauförderstrecken 105 zu vermeiden.

Die Beladestation 200 gemäß Fig. 1 kann eine Kulisse aufweisen, entlang welcher ein Öffnungsbügel der Tasche 1, welcher eine obere Öffnung der Tasche 1 begrenzt und an dem zwei Seitenwände der Tasche 1 unter einem Abstand zueinander auf gegenüberliegenden Seiten des Bügels befestigt sind, aus der Vertikale in die Horizontale überführt ist, sodass der Bediener von oben in die Tasche 1 eingreifen und den von der Tasche 1 aufgenommenen Gegenstand entnehmen kann.

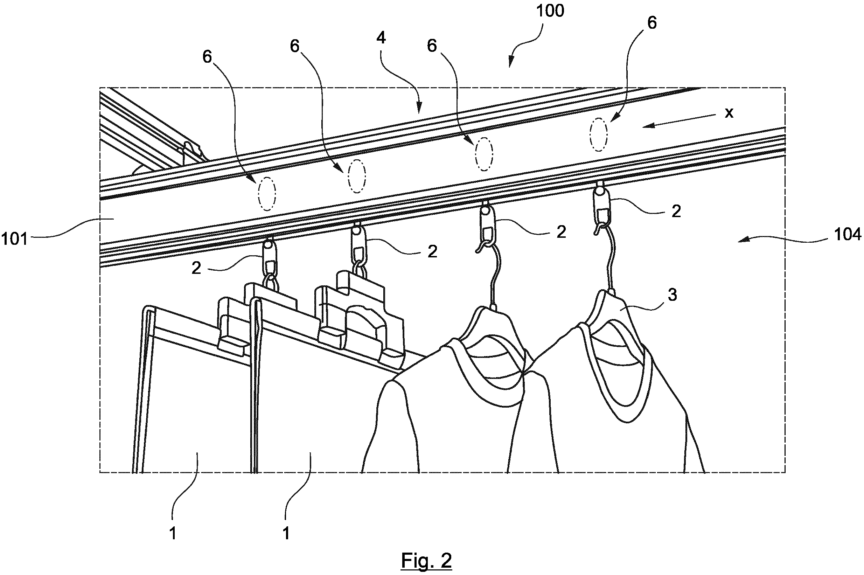

Die Figur 2 zeigt eine erste beispielhafte Ausführungsform einer erfindungsgemäßen Entladestation 104. Diese weist beispielsweise als Lichtzeiger ausgebildete verstellbare Anzeigeelemente 6 einer optischen Anzeige 4 auf. Die verstellbaren Anzeigeelemente 6 bilden ein Ampelsystem, wobei ein in der Entladesequenz als nächstes zu entladendes Transportgut 1, 3 mit einem grünen Anzeigeelement 6 und ein noch nicht oder bereits entladenes Transportgut 1, 3, also alle übrigen Transportgut 1, 3 desselben Batchs, mit einem roten Anzeigeelement 6 angezeigt sind. Die Anzeigeelemente 6 können beispielsweise unmittelbar auf die Förderschiene 101, in welche die Transportgüter 1, 3 über Carrier 2 eingehängt sind und entlang welcher die Transportgüter 1, 3 transportiert sind, projiziert werden, beispielsweise indem die Anzeigeelemente 6 wie vorliegend als Lichtzeiger ausgebildet sind. Der Lichtzeiger kann einen gerichteten Lichtstahl aufweisen, beispielsweise einen Laserstrahl.

Es ist erkennbar, dass aufgrund des Ampelsystems, welches mit Hilfe der Anzeigeelemente 6 bereitgestellt ist, die Reihenfolge, in welcher die Transportgüter 1, 3 der Entladestation 104 zugeführt sind, irrelevant ist, um dennoch die sequenzierte Entladung der Transportgüter 1, 3 in einer definierten Reihenfolge zu erreichen.

Wenn nicht bereits aus der Reihenfolge, mit welcher die Transportgüter 1, 3 beispielsweise aus einer Sortiermatrix ausgeschleust und der Entladestation 104 zugeführt wurden, eindeutig ist, in welcher Reihenfolge die Transportgüter 1, 3 der Entladestation 104 zugeführt sind, kann an einem Eingang (nicht dargestellt) der Entladestation 104, über den die Transportgüter 1, 3 eines Batchs von Transportgütern 1, 3 der Entladestation 1, 4 eingeschleust sind, ein Sensor angeordnet sein, welcher dazu eingerichtet ist, beispielsweise anhand einer eindeutigen Kennung der Carrier 2 die (willkürliche) Reihenfolge der Transportgüter 1, 3 des Batchs, mit welcher diese der Entladestation 104 zugeführt werden, zu erfassen, um davon abhängig die optische Anzeige 4 mit den Anzeigeelementen 6 entsprechend einer bevorzugten Entladereihenfolge der Transportgüter 1, 3 anzusteuern.

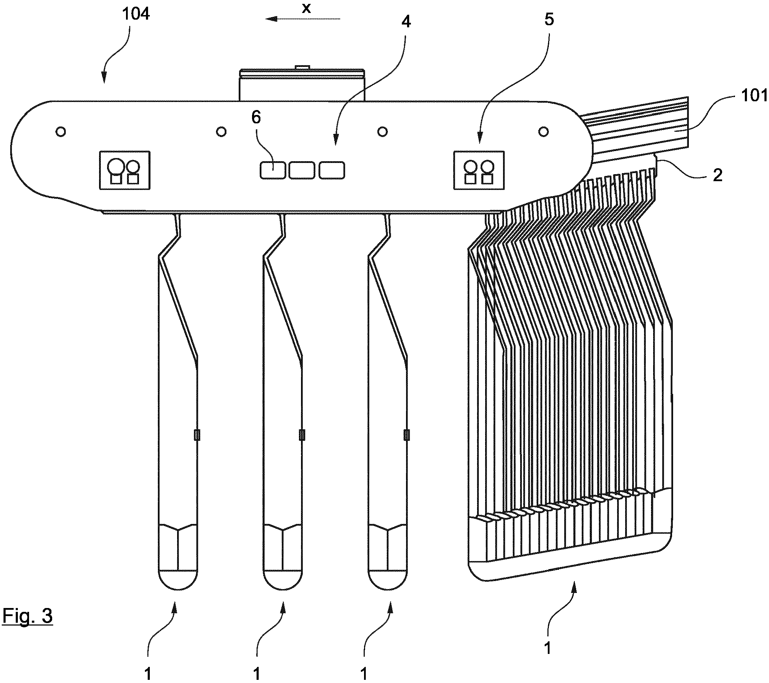

Die in Figur 3 gezeigte Ausführungsform einer Entladestation 104 ist dazu eingerichtet, einen Batch bestehend aus drei Taschen 1 auf einem vorbestimmten Abstand zueinander zu positionieren, um das komfortable Entladen der Taschen 1 zu begünstigen. Die optische Anzeige 4 weist dementsprechend drei unabhängig voneinander ansteuerbare optische Anzeigeelemente 6 auf, welche als einzeln ansteuerbare Leuchtelemente ausgebildet sind. Eine Eingabe 5 ist dazu vorgesehen, um die erfolgte Entladung einer Tasche 1 zu quittieren und demgemäß die Entladestation 104 dazu anzusteuern, eine nächste Tasche 1 des Batchs zu entladener Taschen 1 anzuzeigen.

Der Ausführungsform gemäß Figur 3 ist ebenfalls abweichend von Figur 2 zu entnehmen, dass die einzelnen Anzeigeelemente 6 den zu entladenen Taschen 1 nicht unmittelbar zugeordnet sein müssen und es ausreichen kann, allein aufgrund der horizontalen Anordnung der Anzeigeelemente 6 nebeneinander die als nächstes zu entladene Tasche 1 anzuzeigen. Dies ermöglicht auch mit Hilfe fest angeordneter Anzeigeelemente 6 auf variable Parkpositionen der Transportgüter 1, 3 innerhalb der Entladestation 104 zu reagieren, beispielsweise um bei bekannten Abmessungen der Taschen 1 beziehungsweise in den Taschen 1 aufgenommener Gegenstände einen Mindestabstand zwischen den Taschen 1 einzuhalten, beispielsweise wenn mindestens eine der Taschen 1 aufgrund eines großen aufgenommenen Gegenstands in horizontaler Richtung, insbesondere in der Förderrichtung x, baucht.

An einer Zuführung der Entladestation 104 ist die Förderschiene 101 mit einem Gefälle in Richtung Entladestation 104 angeschlossen, sodass die Taschen auf Stoß zueinander und schwerkraftgetrieben der Entladestation 104 zugeführt sind. Mit Hilfe eines Zuführmechanismus (nicht dargestellt) können die Taschen batchweise der Entladestation 104 zugeführt werden, sodass sichergestellt ist, dass stets das Ensemble aus Taschen 1, welches aktuell in den Parkpositionen der Entladestation 104 angeordnet ist, einen zusammengehörenden Batch aus Taschen 1 bildet.

Der Zuführmechanismus kann eine Taschenvereinzelung oder eine Carrier-Vereinzelung aufweisen. Weiterhin kann der Zuführmechanismus eine Sensorik aufweisen, die dazu eingerichtet ist, eine eindeutige Kennung des Transportguts 1,3 und/oder vorzugsweise eines das Transportgut 1,3 tragenden Carriers auszulesen. Über die eindeutige Kennung kann das an dem Carrier hängende Transportgut 1,3 bzw. ein in dem Transportgut aufgenommener Gegenstand und/oder eine physikalische Eigenschaft und/oder ein Sortierziel und/oder eine andere das Transportgut 1, 3 bzw. den Gegenstand kennzeichnende Eigenschaft verknüpft sein.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Tasche
- 2: Carrier
- 3: Kleiderbügel
- 4: optische Anzeige
- 5: Eingabe
- 6: Anzeigeelement
- 100: Hängeförderer
- 101: Förderschiene
- 102: Weiche
- 103: Schrägförderer
- 104: Entladestation
- 105: Stauförderer
- 106: Überfüllsensor
- 107: Transferförderer
- 108: Übergang
- 109: Sortiermatrix
- 110: Taschenpuffer
- 200: Beladestation

## Patentansprüche

1. Hängeförderer (100) mit einer Vielzahl an einer Förderschiene (101) hängender und entlang der Förderschiene (101) geförderter Carrier (2) zum Einhängen eines Transportguts (1,3), etwa einer Tasche (1) und/oder eines Kleiderbügels (3), und mit mindestens einer Sortiermatrix (109) und einer Entladestation (104), der von der Sortiermatrix (109) mehrere der Transportgüter (1, 3) zugeführt sind, **dadurch gekennzeichnet, dass** die Transportgüter (1, 3) der Entladestation (104) als ein Batch einer bestimmten Anzahl der Transportgüter (1, 3) zugeführt sind, wobei die Entladestation (104) eine optische Anzeige (4) aufweist, die dazu eingerichtet ist, eine Entladereihenfolge der Transportgüter (1, 3) des Batchs anzugeben.

2. Hängeförderer (100) nach Anspruch 1, bei dem die Entladestation (104) eine Eingabe (5) für die Quittierung der Entleerung eines der Transportgüter (1, 3) des Batchs aufweist.

3. Hängeförderer (100) nach Anspruch 2, bei dem die Entladestation (104) dazu eingerichtet ist, infolge einer Betätigung der Eingabe (5) mit den optischen Anzeigen (4) das in der Entladereihenfolge nächste Transportguts (1, 3) anzuzeigen.

4. Hängeförderer (100) nach einem der vorangegangenen Ansprüche, bei der die optische Anzeige (4) mindestens ein örtlich verstellbares Anzeigeelement (6) aufweist, wobei das örtlich verstellbare Anzeigeelement (6) vorzugsweise ein Lichtzeiger ist.

5. Hängeförderer (100) nach einem der vorangegangen Ansprüche, bei der die Entladestation (104) eine Mehrzahl Parkpositionen für jeweils eines der Transportgüter (1, 3) aufweist, wobei vorzugsweise mindestens eine der Parkpositionen in Förderrichtung (x) der Transportgüter (1, 3) durch die Entladestation (104) variabel ist.

6. Hängeförderer (100) nach Anspruch 5, bei der zumindest die der in Förderrichtung (x) variablen Parkposition zugeordnete optische Anzeige (4) in der Förderrichtung (x) variabel einstellbar ist.

7. Hängeförderer (100) nach Anspruch 6, bei der die in der Förderrichtung (x) variabel einstellbare optische Anzeige (4) einen projizierten und entlang der Förderrichtung (x) verstellbaren Lichtzeiger und/oder ein Display mit einem darauf angezeigten Indikatorelement mit in der Förderrichtung (x) variabler Position und/oder eine Mehrzahl einzeln ansteuerbarer und in der Förderrichtung (x) zueinander beabstandeter Leuchtelemente aufweist.

8. Hängeförderer (100) nach einem der vorangegangenen Ansprüche, bei dem die optische Anzeige (4) eine Ampel aufweist, die dazu eingerichtet ist, durch wechselnde, farbige Leuchtsignale die Entladereihenfolge der Transportgüter (1, 3) des Batchs anzugeben.

9. Hängeförderer (100) nach einem der vorangegangenen Ansprüche, bei dem die Entladestation (104) eine der Anzahl der Transportgüter (1, 3) des Batchs entsprechende Anzahl Parkpositionen aufweist, in denen die Transportgüter (1, 3) in Förderrichtung (x) zueinander eine definierte Position in Bezug auf die optische Anzeige (4) aufweisen.

10. Hängeförderer (100) nach Anspruch 5, bei dem jeder Parkposition ein Ziffernfeld der optischen Anzeige (4) zugeordnet ist, wobei die Entladereihenfolge anhand einer auf den Ziffernfeldern angezeigten Zahlensequenz angegeben ist.

11. Hängeförderer (100) nach Anspruch 5, bei dem jeder Parkposition eine optische Projektion oder ein Leuchtelement der optischen Anzeige (4) zugeordnet ist und die optischen Projektionen oder die Leuchtelemente unabhängig voneinander ansteuerbar ist.

12. Hängeförderer (100) nach Anspruch 5, bei dem die Transportgüter (1, 3) des Batchs in den Parkpositionen einen definierten Abstand zueinander und vorzugsweise eine ergonomische Anordnung in Bezug auf einen Arbeitsplatz der Entladestation (104) aufweisen.

13. Hängeförderer (100) nach Anspruch 5, bei dem mindestens eine der Parkpositionen in Förderrichtung (x) variabel und abhängig von einer Abmessung des Transportguts (1, 3) in der Förderrichtung (x) eingestellt ist.

14. Hängeförderer (100) nach einem der vorangegangen Ansprüche, bei der die Transportgüter (1, 3) des Batchs von einer Förderkette in der Förderrichtung (x) durch die Entladestation (104) gefördert sind, wobei die Förderkette unter einem konstanten Rasterabstand entlang der Förderkette beabstandete Mitnehmerelemente aufweist, die dazu eingerichtet sind, an einem Carrier der Transportgüter (1, 3) zu koppeln, wobei der Abstand aufeinanderfolgender Transportgüter (1, 3) des Batchs einem Vielfachen des Rasterabstands entspricht und das Vielfache vorzugsweise abhängig von einer Abmessung des Transportguts (1, 3) in der Förderrichtung (x) ausgewählt ist.

15. Hängeförderer (100) nach einem der vorangegangenen Ansprüche, bei der die Entladestation (4) dazu eingerichtet ist, einen Speicher oder eine Kennung mindestens einer der Taschen (1) des Batchs oder eines Carriers, an dem die Tasche (1) hängend befestigt ist, auszulesen, wobei in dem Speicher ein Datensatz hinterlegt oder mit der Kennung ein Datensatz verknüpft ist, der mindestens eine Abmessung und/oder ein Gewicht, vorzugsweise eines in der Tasche (1) aufgenommenen Transportguts, aufweist, wobei abhängig von der mindestens einen Abmessung und/oder dem Gewicht eine Parkposition der Tasche (1) und/oder mindestens einer der Tasche (1) nachfolgend der Entladestation (104) zugeführten weiteren Tasche (1) des Batchs entlang der Förderrichtung (x) in der Entladestation (104) bestimmt ist.

## Geänderte Patentansprüche

### Geänderte Patentansprüche gemäss Regel 137(2) EPÜ.

1. Hängeförderer (100) mit einer Vielzahl an einer Förderschiene (101) hängender und entlang der Förderschiene (101) geförderter Carrier (2) zum Einhängen eines Transportguts (1, 3), etwa einer Tasche (1) und/oder eines Kleiderbügels (3), und mit mindestens einer Sortiermatrix (109) und einer Entladestation (104), der von der Sortiermatrix (109) mehrere der Transportgüter (1, 3) als ein Batch einer bestimmten Anzahl der Transportgüter (1, 3) zugeführt sind, wobei die Entladestation (104) eine optische Anzeige (4) aufweist, **dadurch gekennzeichnet, dass** die optische Anzeige (4) dazu eingerichtet ist, eine Entladereihenfolge der Transportgüter (1, 3) des Batchs anzugeben.

2. Hängeförderer (100) nach Anspruch 1, bei dem die Entladestation (104) eine Eingabe (5) für die Quittierung der Entleerung eines der Transportgüter (1, 3) des Batchs aufweist.

3. Hängeförderer (100) nach Anspruch 2, bei dem die Entladestation (104) dazu eingerichtet ist, infolge einer Betätigung der Eingabe (5) mit der optischen Anzeige (4) das in der Entladereihenfolge nächste Transportguts (1, 3) anzuzeigen.

4. Hängeförderer (100) nach einem der vorangegangenen Ansprüche, bei der die optische Anzeige (4) mindestens ein örtlich verstellbares Anzeigeelement (6) aufweist, wobei das örtlich verstellbare Anzeigeelement (6) vorzugsweise ein Lichtzeiger ist.

5. Hängeförderer (100) nach einem der vorangegangen Ansprüche, bei der die Entladestation (104) eine Mehrzahl Parkpositionen für jeweils eines der Transportgüter (1, 3) aufweist, wobei vorzugsweise mindestens eine der Parkpositionen in Förderrichtung (x) der Transportgüter (1, 3) durch die Entladestation (104) variabel ist.

6. Hängeförderer (100) nach Anspruch 5, bei der zumindest die der in Förderrichtung (x) variablen Parkposition zugeordnete optische Anzeige (4) in der Förderrichtung (x) variabel einstellbar ist.

7. Hängeförderer (100) nach Anspruch 6, bei der die in der Förderrichtung (x) variabel einstellbare optische Anzeige (4) einen projizierten und entlang der Förderrichtung (x) verstellbaren Lichtzeiger und/oder ein Display mit einem darauf angezeigten Indikatorelement mit in der Förderrichtung (x) variabler Position und/oder eine Mehrzahl einzeln ansteuerbarer und in der Förderrichtung (x) zueinander beabstandeter Leuchtelemente aufweist.

8. Hängeförderer (100) nach einem der vorangegangenen Ansprüche, bei dem die optische Anzeige (4) eine Ampel aufweist, die dazu eingerichtet ist, durch wechselnde, farbige Leuchtsignale die Entladereihenfolge der Transportgüter (1, 3) des Batchs anzugeben.

9. Hängeförderer (100) nach einem der vorangegangenen Ansprüche, bei dem die Entladestation (104) eine der Anzahl der Transportgüter (1, 3) des Batchs entsprechende Anzahl Parkpositionen aufweist, in denen die Transportgüter (1, 3) in Förderrichtung (x) zueinander eine definierte Position in Bezug auf die optische Anzeige (4) aufweisen.

10. Hängeförderer (100) nach Anspruch 5, bei dem jeder Parkposition ein Ziffernfeld der optischen Anzeige (4) zugeordnet ist, wobei die Entladereihenfolge anhand einer auf den Ziffernfeldern angezeigten Zahlensequenz angegeben ist.

11. Hängeförderer (100) nach Anspruch 5, bei dem jeder Parkposition eine optische Projektion oder ein Leuchtelement der optischen Anzeige (4) zugeordnet ist und die optischen Projektionen oder die Leuchtelemente unabhängig voneinander ansteuerbar ist.

12. Hängeförderer (100) nach Anspruch 5, bei dem die Transportgüter (1, 3) des Batchs in den Parkpositionen einen definierten Abstand zueinander und vorzugsweise eine ergonomische Anordnung in Bezug auf einen Arbeitsplatz der Entladestation (104) aufweisen.

13. Hängeförderer (100) nach Anspruch 5, bei dem mindestens eine der Parkpositionen in Förderrichtung (x) variabel und abhängig von einer Abmessung des Transportguts (1,3) in der Förderrichtung (x) eingestellt ist.

14. Hängeförderer (100) nach einem der vorangegangen Ansprüche, bei der die Transportgüter (1, 3) des Batchs von einer Förderkette in der Förderrichtung (x) durch die Entladestation (104) gefördert sind, wobei die Förderkette unter einem konstanten Rasterabstand entlang der Förderkette beabstandete Mitnehmerelemente aufweist, die dazu eingerichtet sind, an einem Carrier der Transportgüter (1, 3) zu koppeln, wobei der Abstand aufeinanderfolgender Transportgüter (1, 3) des Batchs einem Vielfachen des Rasterabstands entspricht und das Vielfache vorzugsweise abhängig von einer Abmessung des Transportguts (1, 3) in der Förderrichtung (x) ausgewählt ist.

15. Hängeförderer (100) nach einem der vorangegangenen Ansprüche, bei der die Entladestation (4) dazu eingerichtet ist, einen Speicher oder eine Kennung mindestens einer der Taschen (1) des Batchs oder eines Carriers, an dem die Tasche (1) hängend befestigt ist, auszulesen, wobei in dem Speicher ein Datensatz hinterlegt oder mit der Kennung ein Datensatz verknüpft ist, der mindestens eine Abmessung und/oder ein Gewicht, vorzugsweise eines in der Tasche (1) aufgenommenen Transportguts, aufweist, wobei abhängig von der mindestens einen Abmessung und/oder dem Gewicht eine Parkposition der Tasche (1) und/oder mindestens einer der Tasche (1) nachfolgend der Entladestation (104) zugeführten weiteren Tasche (1) des Batchs entlang der Förderrichtung (x) in der Entladestation (104) bestimmt ist.
